# EUROPEAN PATENT APPLICATION

(11) **EP 4 456 670 A1**
(43) Date of publication of application: **30.10.2024**
(21) Application number: 23821856.4
(22) Date of filing: 12.07.2023
(51) Int. Cl.: H05B 6/76, A47J 36/00, A47J 27/04

(54) **DOOR ASSEMBLY AND COOKING APPLIANCE**

(30) Priority: 08.03.2023 CN 202310216120
(71) Applicant: Guangdong Midea Kitchen Appliances Manufacturing Co., Ltd., Foshan, Guangdong 528311 (CN)
(72) Inventor: LIU, Binbin, Foshan, Guangdong 528311 (CN); JOO, Modam, Foshan, Guangdong 528311 (CN); CHO, Jae Man, Foshan, Guangdong 528311 (CN); HUANG, Zhifei, Foshan, Guangdong 528311 (CN); LIU, Zhi, Foshan, Guangdong 528311 (CN); WANG, Wenbo, Foshan, Guangdong 528311 (CN); TIAN, Chensheng, Foshan, Guangdong 528311 (CN)
(74) Representative: RGTH
(86) International application number: PCT/CN2023/106946
(87) International publication number: WO 2024/183207

(57) **Abstract**

The present disclosure provides a door assembly and a cooking appliance, and, the door assembly is used for a cooking appliance, and the cooking appliance includes a microwave generating device and a cooking cavity, the microwave generating device can radiate microwave into the cooking cavity, and the door assembly includes: a main body; a door seal assembly, connected to the main body, and the door seal assembly is located at the side of the main body facing the cooking cavity and includes a wave suppressing groove, and the notch of the wave suppressing groove faces the cooking cavity, and at least one bending portion is provided in the wave suppressing groove. Thus, a portion of the microwave in the cooking cavity can be transmitted into the wave suppressing groove through the notch of the wave suppressing groove, at least a portion of the microwave is transmitted to the notch of the wave suppressing groove within the wave suppressing groove along the groove wall of the wave suppressing groove, at least a portion of the microwave transmitted into the wave suppressing groove superposes and offsets at least a portion of the microwave transmitted out of the wave suppressing groove mutually, and the wave suppressing groove has the function of reducing wave leakage. Moreover, providing at least one bending portion in the wave suppressing groove can extend the transmitting path of the microwave in the wave suppressing groove, and further enhance the ability of the wave suppressing groove in reducing the wave leakage.

## Description

### CROSS-REFERENCE TO RELATED APPLICATIONS

This disclosure claims priority to Chinese Patent Application No. 202310216120.4 filed with China National Intellectual Property Administration on March 8, 2023 and entitled "DOOR ASSEMBLY AND COOKING APPLIANCE", the entire contents of which are herein incorporated by reference.

### FIELD

The embodiments of the present disclosure relate to the technical filed of household electrical equipment, and particularly, relates to a door assembly and a cooking appliance.

### BACKGROUND

When a microwave cooking appliance in the prior art performs microwave heating to the food ingredients in its cooking cavity through microwave, the problem usually appears that the microwave in the cooking cavity leaks along a door body, and then leads to the low working efficiency of the cooking appliance.

### SUMMARY

The present disclosure aims to solve at least one of the technical problems existing in the prior art or related art.

Therefore, the first purpose of the present disclosure is to provide a door assembly.

The second purpose of the present disclosure is to provide a cooking appliance.

In order to achieve at least one of the above purposes, according to the first aspect of the present disclosure, a door assembly is provided, and the door assembly is used for a cooking appliance, and the cooking appliance includes a microwave generating device and a cooking cavity, the microwave generating device can radiate microwave into the cooking cavity, and the door assembly includes: a main body; a door seal assembly, connected to the main body, and the door seal assembly is located at the side of the main body facing the cooking cavity and includes a wave suppressing groove, and the notch of the wave suppressing groove faces the cooking cavity, and at least one bending portion is provided in the wave suppressing groove.

The door assembly provided in the present disclosure is used for a cooking appliance, the cooking appliance includes a cooking cavity, the cooking cavity is used to accommodate food ingredients, and the door assembly can open or close the cooking cavity. The cooking appliance is further provided with a microwave generating device, and the microwave generating device can generate microwave and radiate the microwave into the cooking cavity, to perform microwave heating to the food ingredients inside the cooking cavity. In order to reduce the microwave leakage of the door assembly, the present disclosure provides the wave suppressing groove for reducing wave leakage. The structure of the door assembly is defined hereinafter.

The door assembly includes the main body and the door seal assembly, and, the door seal assembly is connected to the side of the main body facing the cooking cavity, and the wave suppressing groove is provided in the door seal assembly. In an embodiment, the wave suppressing groove includes a notch, the notch of the wave suppressing groove faces the cooking cavity, and the microwave in the cooking cavity can be transmitted into the wave suppressing groove through the notch of the wave suppressing groove. The groove wall of the wave suppressing groove is made of a metal material, at least a portion of the microwave can be transmitted along the groove wall of the wave suppressing groove, and after the microwave is transmitted into the wave suppressing groove, at least a portion of the microwave is transmitted along the groove wall of the wave suppressing groove to the notch of the wave suppressing groove, at this moment, the microwave transmitted out of the wave suppressing groove superposes and offsets the microwave transmitted into the wave suppressing groove mutually, and thus this achieves a function of reducing wave leakage. The wavelength of the microwave generated by the microwave generating device is λ, the length of the transmitting path of at least a portion of the microwave in the wave suppressing groove is N× λ/2, and N is a positive odd number, the microwave which transmitting path in the wave suppressing groove is N× λ/2 superposes the microwave transmitted into the wave suppressing groove at the notch of the wave suppressing groove, at this moment, the wave peaks and the wave troughs of the two microwaves superpose each other, and the microwave transmitted into the wave suppressing groove can offset the microwave transmitted out of the wave suppressing groove mutually, and thus the function of reducing wave leakage is achieved.

Furthermore, in order to enhance the ability of the wave suppressing groove in reducing the wave leakage, the present disclosure provides at least one bending portion in the wave suppressing groove. It can be understood that the transmitting path of the microwave in the wave suppressing groove can be extended through providing at least one bending portion in the wave suppressing groove, as at least a portion of the microwave in the wave suppressing groove is transmitted along a metal member, the bending portion is made of a metal material, and at least a portion of the microwave is transmitted along the groove wall of the wave suppressing groove and the surface of the bending portion within the wave suppressing groove. Thus, with respect to a wave suppressing groove which is not provided with the bending portion, the transmitting path of the microwave in the wave suppressing groove is extended, and more microwave can superpose and offset the microwave transmitted into the wave suppressing groove at the notch of the wave suppressing groove, and the ability of the wave suppressing groove in reducing the wave leakage is enhanced.

The wave suppressing groove is provided in the door seal assembly, and the notch of the wave suppressing groove is arranged facing the cooking cavity, and a portion of the microwave in the cooking cavity can be transmitted into the wave suppressing groove through the notch of the wave suppressing groove, at least a portion of the microwave is transmitted to the notch of the wave suppressing groove within the wave suppressing groove along the groove wall of the wave suppressing groove, at least a portion of the microwave transmitted into the wave suppressing groove superposes and offsets at least a portion of the microwave transmitted out of the wave suppressing groove mutually, and the wave suppressing groove has the function of reducing wave leakage. Moreover, providing at least one bending portion in the wave suppressing groove can extend the transmitting path of the microwave in the wave suppressing groove, and further enhance the ability of the wave suppressing groove in reducing the wave leakage.

The above door assembly according to the present disclosure can further include the following distinguishing technical features.

In some embodiments, the door seal assembly includes at least one wave suppressing member, and the wave suppressing member constitutes at least a portion of the groove wall of the wave suppressing groove, and the bending portion is provided at the wave suppressing member.

In the embodiment, the structure of the door seal assembly is further defined. The door seal assembly includes at least one wave suppressing member, the wave suppressing member constitutes at least a portion of the groove wall of the wave suppressing groove, and the bending portion is provided at the wave suppressing member. The wave suppressing member is made of a metal material; since the bending portion is provided at the wave suppressing member, the bending portion can be connected to the groove wall of the wave suppressing groove, after the microwave is transmitted to the wave suppressing groove, at least a portion of the microwave is transmitted along the groove wall of the wave suppressing groove. When the microwave is transmitted to the wave suppressing member, the microwave can be transmitted along the surface of the bending portion provided at the wave suppressing member, the transmitting path of the microwave is extended, until the microwave is transmitted to the notch of the wave suppressing groove, at this moment, at least a portion of the microwave transmitted out of the wave suppressing groove superposes and offsets at least a portion of the microwave transmitted into the wave suppressing groove mutually, and the wave suppressing groove has the function of reducing wave leakage.

Through providing at least one wave suppressing member in the door seal assembly, the wave suppressing member constitutes at least a portion of the groove wall of the wave suppressing groove, and providing the bending portion at the wave suppressing member can achieve connecting the bending portion to the groove wall of the wave suppressing groove, and at least a portion of the microwave can be transmitted along the surface of the bending portion in the process of transmission along the groove wall of the wave suppressing groove, firstly, this can mount and fix the bending portion, and secondly, this extends the transmitting path of the microwave and enhances the ability of the wave suppressing groove in reducing the wave leakage.

In some embodiments, the door seal assembly further includes a door seal plate, and a rear cover connected to the door seal plate, and the rear cover is provided at the side of the door seal plate facing the cooking cavity, at least a portion of the door seal plate, at least a portion of the rear cover and the wave suppressing member enclose the wave suppressing groove.

In the embodiment, the structure of the door seal assembly is further defined. The door seal assembly further includes the door seal plate and the rear cover, and the rear cover is connected to the door seal plate, and the door seal plate is located between the rear cover and the main body. There is a gap between the door seal plate and at least a portion of the rear cover, the wave suppressing member is located between at least a portion of the rear cover and the door seal plate, the rear cover, the door seal plate and the wave suppressing member jointly enclose the wave suppressing groove.

Furthermore, the rear cover is located at the side of the door seal plate facing the cooking cavity, and the edge of the rear cover and the edge of wave suppressing member have a certain gap therebetween, and the notch of the wave suppressing groove can be defined through the edge of the rear cover and the edge of the wave suppressing member, and the notch of the wave suppressing groove is arranged facing the cooking cavity. After the microwave is transmitted into the wave suppressing groove through the notch of the wave suppressing groove, at least a portion of the microwave is transmitted along the rear cover, the door seal plate and the surface of the wave suppressing member sequentially, until at least a portion of the microwave transmitted out of the wave suppressing groove superposes and offsets at least a portion of the microwave transmitted into the wave suppressing groove mutually when the microwave is transmitted to the notch of the wave suppressing groove, and thus the technical effect of reducing wave leakage is achieved.

In a possible embodiment, the door seal plate, the rear cover and the wave suppressing member are made of a cold rolled steel plate, and an enamel coating is added on the surface of the cold rolled steel plate, and product costs can be lowered, then the product is cost-effective, and further, the door seal assembly can meet the heat resistance need of the cooking appliances. The door seal plate, the rear cover and the wave suppressing member can further be made of a stainless steel plate or other metal materials.

In some embodiments, the door seal assembly further includes a heat insulating plate mounted on the rear cover, at least a portion of the heat insulating plate is arranged opposite to the notch of the wave suppressing groove, and the heat insulating plate can let the microwave pass through.

In the embodiment, the structure of the door seal assembly is further defined. The cooking appliance using the door assembly provided in the present disclosure has a high temperature seal-cleaning function, when the cooking appliance performs high temperature seal-cleaning to the inside of the cooking cavity, the temperature within the cooking cavity can reach 450°C, to carbonize the oil in the cooking cavity and then achieve the seal-cleaning function. A conventional door body cannot bear the high temperature of 450°C, firstly, the door body can be easily damaged due to the high temperature, and then a portion of the components in the door body fail, and secondly, since the door body cannot effectively insulate the high temperature in the cooking cavity, the temperature of the outer wall of the door body is too high, and then users can be easily burned. To improve the heat insulating effect of the door seal assembly, the present disclosure further provides the heat insulating plate in the door seal assembly.

In an embodiment, the heat insulating plate is mounted on the rear cover, and is located at the side of the door seal assembly facing the cooking cavity; since the heat insulating plate has a heat insulating effect, the high temperature in the cooking cavity can be insulated through the heat insulating plate, to protect other components in the door assembly, and this can further lower the temperature of the wall face of the door assembly facing the outside, and then prevent burning users.

In a possible embodiment, the heat insulating plate is made from a Borosilicate glass, and the heat insulating plate can bear the high temperature of 450°C,to meet the use needs on the cooking appliance.

Furthermore, the heat insulating plate can let the microwave pass through, and in order to transmit the microwave in the cooking cavity into the wave suppressing groove, the present disclosure provides at least a portion of the heating insulating plate opposite to the notch of the wave suppressing groove, and a portion of the microwave in the cooking cavity can pass through the heat insulating plate and then is transmitted into the wave suppressing groove, and then the technical effect is achieved that the wave suppressing groove reduces wave leakage.

In some embodiments, the door seal assembly further includes a wave suppressing plate provided between the door seal plate and the rear cover, in the case that there are multiple wave suppressing members, the multiple wave suppressing members are sequentially connected to the edge of the wave suppressing plate along the circumference of the wave suppressing plate.

In the embodiment, the structure of the door seal assembly is further defined. To mount and fix the wave suppressing member, the present disclosure further provides the wave suppressing plate in the door seal assembly, and the wave suppressing plate is located between the door seal plate and the rear cover, in the case that there are multiple wave suppressing members, the multiple wave suppressing members are sequentially connected to the edge of the wave suppressing plate along the circumference of the wave suppressing plate, therefore, the wave suppressing member can be mounted and fixed through the wave suppressing plate. There is a certain gap between any two adjacent wave suppressing members. The rear cover, the door seal plate and the wave suppressing plate can be connected through a screw.

In the case that the number of the wave suppressing member is one, the wave suppressing member is connected to the edge of the wave suppressing plate.

In some embodiments, the door seal assembly further includes a partition plate connected to the door seal plate, the partition plate and the inner wall of the main body jointly enclose an air duct; one end of the air duct communicates with the heat dissipation cavity of the cooking appliance and the other end communicates with the outside, and the air duct is used to discharge the air flow in the heat dissipation cavity, to lower the temperature of the door assembly.

In the embodiment, the structure of the door seal assembly is further defined. When the cooking appliance executes the high temperature seal-cleaning function, the temperature in the cooking cavity is relatively high, if the temperature of the door assembly is not lowered, this will result in damaging the door assembly due to the high temperature, and result in an excessively high temperature of the wall face of the door assembly facing the outside, which easily burns the user. To avoid the above problems, the present disclosure further provides the partition plate in the door assembly, and the partition plate can define the air duct for discharging air with the main body, to lower the temperature of the door assembly.

In an embodiment, the partition plate is connected to the side of the door seal plate facing the main body, there is a certain gap between the partition plate and the inner wall of the main body, and the partition plate and the inner wall of the main body enclose the air duct. The cooking appliance using the door assembly further includes the heat dissipation cavity, the heat dissipation cavity is provided with a heat dissipating device for dissipating the heat of the cooking appliance, and the heat dissipating device can form an air flow, and the effect of dissipating the heat of the cooking appliance can be achieved through discharging the air flow out of the cooking appliance. One end of the air duct communicates with the outside and the other end communicates with the heat dissipation cavity, and the air flow in the heat dissipation cavity can be discharged to the outside through the air duct in the door assembly. Therefore, firstly, heat dissipation can be conducted to the door assembly through the air duct, and this prevents damaging the door assembly due to the excessively high temperature in the door assembly, and secondly, through disposing the partition plate, heat insulation can be conducted through the partition plate, and thus this effectively lowers the temperature of the wall face of the door assembly facing the outside, and prevents the door assembly from burning the user. Moreover, discharging the air flow in the heat dissipation cavity through the air duct in the door assembly can further dissipate the heat in the heat dissipation cavity, and then has the function of lowering the temperature of the cooking appliance.

Through disposing the partition plate in the main body, the air duct can be enclosed through the partition plate and the main body, and the air flow in the heat dissipation cavity of the cooking appliance is discharged to the outside through the air duct, firstly, heat dissipation to the door assembly can be conducted through the air duct, and this prevents damaging the door assembly due to the high temperature in the cooking cavity and prolongs the service life and reliability of the door assembly, and secondly, the temperature of the wall face of the door assembly facing the outside can be lowered effectively, which prevents burning the user due to the excessively high temperature of the outer wall of the door assembly and improves product safety.

In some embodiments, the door seal plate is provided with a mounting groove, and the partition plate is mounted in the mounting groove.

In the embodiment, the mounting manner of the partition plate is defined. The door seal plate is provided with the mounting groove for mounting the partition plate, and the partition plate is mounted in the mounting groove. The mounting groove is located at the side of the door seal plate facing the main body, and the partition plate is mounted in the mounting groove, and the partition plate is provided adjacent to the main body, and encloses the air duct with the main body. The partition plate seals the mounting groove to avoid the overflow of the air flow in the air duct.

Through providing the mounting groove in the door seal plate and mounting the partition plate in the mounting groove, the partition plate can be fixed through the door seal plate.

In some embodiments, the partition plate is bonded to the door seal plate.

In the embodiment, the connecting manner of the partition plate and the door seal plate is defined, and the partition plate is bonded to the door seal plate. The partition plate is bonded to the wall face of the mounting groove through a binder. Therefore, the partition plate can be connected to the door seal plate, and the side of the partition plate facing the main body keeps clean; compared with the structure that the partition plate is connected to the door seal plate through a screw, the present disclosure connects the partition plate to the door seal plate through a bonding manner, and can avoid exposing the screw out of the surface of the partition plate, and avoid the interference of connecting members such as the screw with other structures in the door assembly.

Furthermore, the binder can bear the high temperature of 450°C, and the binder does not fail in a high temperature environment.

In some embodiments, the door assembly further includes an upper cover connected to the main body, and the upper cover is provided with multiple air inlets, the air inlets communicate with the heat dissipation cavity of the cooking appliance, and the air duct communicates with the air inlets.

In the embodiment, the structure of the door assembly is further defined. The door assembly further includes the upper cover, the upper cover is connected to the main body and is provided with multiple air inlets, in the case that the upper cover is mounted on the main body, the air inlets communicate with the heat dissipation cavity of the cooking appliance, the air duct communicates with the air inlets, and the air inlets are used for admitting air. The air inlets are arranged facing the air outlet of the heat dissipation cavity, the air flow discharged out of the heat dissipation cavity flows into the air duct through the air inlets and then discharged through the air duct, to achieve the effect of lowering the temperature of the door assembly.

In some embodiments, the main body includes: a mounting frame connected to the door seal assembly; an outer door plate provided at the side of the mounting frame away from the door seal assembly, and one end of the outer door plate is connected to the mounting frame, and the other end is connected to the door seal assembly.

In the embodiment, the structure of the main body is defined. The main body includes the mounting frame and the outer door plate, and the mounting frame is located between the outer door plate and the door seal assembly, and the door seal assembly is connected to the mounting frame. Furthermore, the two ends of the outer door plate are respectively connected to the mounting frame and the door seal assembly. The upper end of the outer door plate is connected to the mounting frame, the side of the outer door plate facing the mounting frame is provided with multiple hooks, the multiple hooks are respectively close to the two sides of the outer door plate, and the hooks can be hooked on the mounting frame, to achieve the connection of the mounting frame and the outer door plate. Furthermore, the lower end of the outer door plate is connected to the door seal assembly through a screw, therefore, the outer door plate can be mounted and fixed through the door seal assembly and the mounting frame at the same time, and this improves the overall stability of the door assembly.

In some embodiments, the door assembly further includes multiple connecting members respectively connected to the two sides of the mounting frame, and the connecting members are used to connect the door assembly to the box body of the cooking appliance.

In the embodiment, the structure of the door assembly is further defined. To mount the door assembly to the box body of the cooking appliance, the present disclosure provides multiple connecting members in the door assembly, and the connecting members are used to connect the door assembly to the box body of the cooking appliance. The multiple connecting members are respectively connected to the two sides of the mounting frame, the connecting members are connected to the mounting frame through a screw, at least a portion of the connecting members extend out of the door assembly and are inserted into connecting holes of the cooking appliance matching the connecting members, and the door assembly can be connected to the box body of the cooking appliance.

In some embodiments, any connecting member includes: a first connecting rod connected to the mounting frame; a air inlet ting rod connected to the box body, and the first connecting rod can rotate with respect to the second connecting rod, and the door assembly can rotate with respect to the box body.

In the embodiment, the structure of the connecting member is defined. Any connecting member includes the first connecting rod and the second connecting rod, and the first connecting rod is connected to the mounting frame, the second connecting rod is connected to the box body of the cooking appliance, and the first connecting rod can rotate with respect to the second connecting rod, i.e., the first connecting rod is hinged to the second connecting rod. In the case that the user needs to open the door assembly, the door assembly can be pulled by the user to rotate towards the direction away from the box body of the cooking appliance, at this moment, the first connecting rod rotates with respect to the second connecting rod, and the door assembly can open the cooking cavity, when the user needs to close the cooking cavity, the door assembly is pushed by the user to rotate towards the direction facing the box body of the cooking appliance, at this moment, the first connecting rod rotates with respect to the second connecting rod, and the door assembly can close the cooking cavity.

In some embodiments, the outer door plate includes a decoration plate, and the material of the partition plate, the heating insulating plate, and the decoration plate is a high temperature resistant glass.

In the embodiment, in order to keep the beauty of the door assembly, the present disclosure further provides the decoration plate at the side of the outer door plate facing the outside, to improve the beauty degree of the door assembly. Furthermore, the decoration plate further has a heat insulating function, and the amount of the heat dissipated from the door assembly to the outside can be further prevented by the decoration plate.

Furthermore, the partition plate, the heat insulating plate and the decoration plate are all made from a high temperature resistant glass, and the high temperature resistant glass can bear a high temperature of 450°C. In a possible embodiment, the partition plate, the heat insulating plate and the decoration plate are made from a Borosilicate glass. That is, the door assembly provided in the present disclosure includes at least three layers of heat insulating members made from a high temperature resistant glass, that is, the partition plate, a second partition plate and the decoration plate, compared with a traditional door body, the door assembly provided in the present disclosure has better heat insulating performance.

The second aspect of the present disclosure further provides a cooking appliance, including: the door assembly provided in the first aspect of the present disclosure; a box body including a cooking cavity, and the door assembly is used for opening or closing the cooking cavity; and a microwave generating device for radiating microwave into the cooking cavity.

The cooking appliance provided in the present disclosure includes the box body and the door assembly, the box body includes the cooking cavity, and the door assembly is connected to the box body and can move between different positions with respect to the box body, and the door assembly can open or close the cooking cavity.

Furthermore, the cooking appliance further includes the microwave generating device, the microwave generating device can generate microwave and radiate microwave into the cooking cavity, and then microwave heating can be conducted to the food ingredients in the cooking cavity through the microwave.

The cooking appliance provided in the second aspect of the present disclosure includes the door assembly provided in the first aspect of the present disclosure, and thus has all the advantageous effects of the door assembly.

In some embodiments, the cooking appliance further includes: a heat dissipation cavity communicating with the air inlets of the door assembly; and a heat dissipating device provided in the heat dissipation cavity, and the heat dissipating device can form an air flow for heat dissipation, and discharge the air flow into the air duct of the door assembly through the air inlets.

In the embodiment, the structure of the cooking appliance is further defined. The cooking appliance further includes the heat dissipation cavity, and the heat dissipation cavity is provided with the heat dissipating device therein, and the heat dissipating device includes a fan. The heat dissipating device can form an air flow for heat dissipation when it operates, the heat dissipation cavity communicates with the air inlets of the door assembly, the air flow enters the door assembly through the air inlets, the door assembly includes multiple air ducts communicating with the outside, and the air flow moves along the air ducts and is discharged to the outside, to achieve the function of lowering the temperature of the door assembly.

In an embodiment, the cooking appliance can be an oven or a microwave steaming and baking integrated machine.

The additional aspects and advantages of the present disclosure will be obvious in the following description, or can be understood through the practice of the present disclosure.

### BRIEF DESCRIPTION OF THE DRAWINGS

The above and/or additional aspects and advantages of the present disclosure will be obvious and understood easily from the description of the embodiments in combination with the accompanying drawings:
FIG. 1 is a first schematic view of the structure of a door assembly according to an embodiment of the present disclosure;
FIG. 2 is a second schematic view of the structure of a door assembly according to an embodiment of the present disclosure;
FIG. 3 is an exploded view of a door assembly according to an embodiment of the present disclosure;
FIG. 4 is a first schematic view of the structure of a door seal assembly according to an embodiment of the present disclosure;
FIG. 5 is an exploded view of a door seal assembly according to an embodiment of the present disclosure;
FIG. 6 is a third schematic view of the structure of the door assembly according to an embodiment of the present disclosure; and
FIG. 7 is a second schematic view of the structure of a door seal assembly according to an embodiment of the present disclosure.

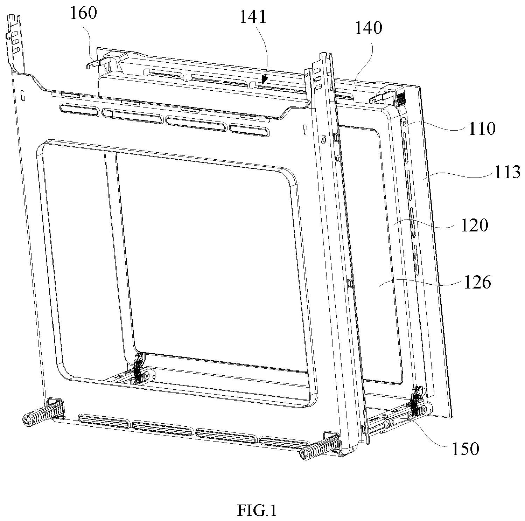

And the corresponding relations between the reference signs and the component names in FIG. 1 to FIG. 7 are as follow:

100 door assembly; 110 main body; 111 mounting frame; 112 outer door plate; 113 decoration plate; 114 hook; 120 door seal assembly; 121 wave suppressing groove; 122 bending portion; 123 wave suppressing member; 124 door seal plate; 125 rear cover; 126 heat insulating plate; 127 wave suppressing plate; 128 mounting groove; 130 partition plate; 131 air duct; 140 upper cover; 141 air inlet; 150 connecting member; 151 first connecting rod; 152 second connecting rod; 160 door hook.

### DETAILED DESCRIPTION OF THE DISCLOSURE

To more clearly understand the above purposes, features and advantages of the present disclosure, the present disclosure will be further detailed hereinafter in combination with the accompanying drawings and embodiments. It should be indicated that in the case of no conflict, the embodiments and the features in the embodiments of the present disclosure can be combined with each other.

Many details are illustrated in the following description for the convenience of a thorough understanding to the present disclosure, but the present disclosure can further be implemented using other embodiments other than these described herein. Therefore, the protection scope of the present disclosure is not limited to the embodiments disclosed in the following text.

A door assembly 100 and a cooking appliance according to some embodiments of the present disclosure are described in the following by referring to FIG. 1 to FIG.7.

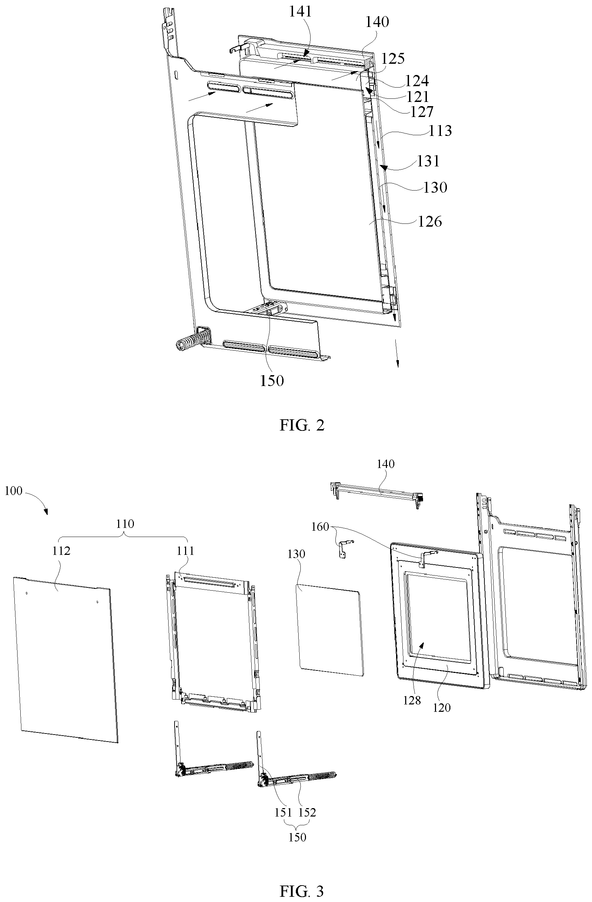

In some embodiments, as shown in FIG. 2, FIG. 4 and FIG. 7, the first aspect of the present disclosure provides a door assembly 100, and the door assembly 100 is used for a cooking appliance, and the cooking appliance includes a microwave generating device and a cooking cavity, the microwave generating device can radiate microwave into the cooking cavity, and the door assembly 100 includes: a main body 110; a door seal assembly 120, connected to the main body 110, and the door seal assembly 120 is located at the side of the main body 110 facing the cooking cavity and includes a wave suppressing groove 121, and the notch of the wave suppressing groove 121 faces the cooking cavity, and at least one bending portion 122 is provided in the wave suppressing groove 121.

The door assembly 100 provided in the present disclosure is used for a cooking appliance, the cooking appliance includes a cooking cavity, the cooking cavity is used to accommodate food ingredients, and the door assembly 100 can open or close the cooking cavity. The cooking appliance is further provided with a microwave generating device, and the microwave generating device can generate microwave and radiate the microwave into the cooking cavity, to perform microwave heating to the food ingredients inside the cooking cavity. In order to reduce the microwave leakage of the door assembly 100, the present disclosure provides the wave suppressing groove 121 for reducing wave leakage. The structure of the door assembly 100 is defined hereinafter.

The door assembly 100 includes the main body 110 and the door seal assembly 120, and the door seal assembly 120 is connected to the side of the main body 110 facing the cooking cavity, and the wave suppressing groove 121 is provided in the door seal assembly 120. In an embodiment, the wave suppressing groove 121 includes a notch, the notch of the wave suppressing groove 121 faces the cooking cavity, and the microwave in the cooking cavity can be transmitted into the wave suppressing groove 121 through the notch of the wave suppressing groove 121. The groove wall of the wave suppressing groove 121 is made of a metal material, at least a portion of the microwave can be transmitted along the groove wall of the wave suppressing groove 121, and after the microwave is transmitted into the wave suppressing groove 121, at least a portion of the microwave is transmitted along the groove wall of the wave suppressing groove 121 to the notch of the wave suppressing groove 121, at this moment, the microwave transmitted out of the wave suppressing groove 121 superposes and offsets the microwave transmitted into the wave suppressing groove 121 mutually, and thus this achieves a function of reducing wave leakage. The wavelength of the microwave generated by the microwave generating device is λ, the length of the transmitting path of at least a portion of the microwave in the wave suppressing groove 121 is N× λ/2, and N is a positive odd number, the microwave which transmitting path in the wave suppressing groove 121 is N× λ/2 superposes the microwave transmitted into the wave suppressing groove 121 at the notch of the wave suppressing groove 121, at this moment, the wave peaks and the wave troughs of the two microwaves superpose each other, and the microwave transmitted into the wave suppressing groove 121 can offset the microwave transmitted out of the wave suppressing groove 121 mutually, and thus the function of reducing wave leakage is achieved.

Furthermore, in order to enhance the ability of the wave suppressing groove 121 in reducing the wave leakage, the present disclosure provides at least one bending portion 122 in the wave suppressing groove 121. It can be understood that the transmitting path of the microwave in the wave suppressing groove 121 can be extended through providing at least one bending portion 122 in the wave suppressing groove 121, as at least a portion of the microwave in the wave suppressing groove 121 is transmitted along a metal member, the bending portion 122 is made of a metal material, and at least a portion of the microwave is transmitted along the groove wall of the wave suppressing groove 121 and the surface of the bending portion 122 within the wave suppressing groove 121. Thus, with respect to a wave suppressing groove 121 which is not provided with the bending portion 122, the transmitting path of the microwave in the wave suppressing groove 121 is extended, and more microwave can superpose and offset the microwave transmitted into the wave suppressing groove 121 at the notch of the wave suppressing groove 121, and the ability of the wave suppressing groove 121 in reducing the wave leakage is enhanced.

The wave suppressing groove 121 is provided in the door seal assembly 120, and the notch of the wave suppressing groove 121 is arranged facing the cooking cavity, and a portion of the microwave in the cooking cavity can be transmitted into the wave suppressing groove 121 through the notch of the wave suppressing groove 121, at least a portion of the microwave is transmitted to the notch of the wave suppressing groove 121 within the wave suppressing groove 121 along the groove wall of the wave suppressing groove 121, at least a portion of the microwave transmitted into the wave suppressing groove 121 superposes and offsets at least a portion of the microwave transmitted out of the wave suppressing groove 121 mutually, and the wave suppressing groove 121 has the function of reducing wave leakage. Moreover, providing at least one bending portion 122 in the wave suppressing groove 121 can extend the transmitting path of the microwave in the wave suppressing groove 121, and further enhance the ability of the wave suppressing groove 121 in reducing the wave leakage.

In some technical embodiments, as shown in FIG. 2, FIG. 4 and FIG. 7, the door seal assembly 120 includes at least one wave suppressing member 123, and the wave suppressing member 123 constitutes at least a portion of the groove wall of the wave suppressing groove 121, and the bending portion 122 is provided at the wave suppressing member 123.

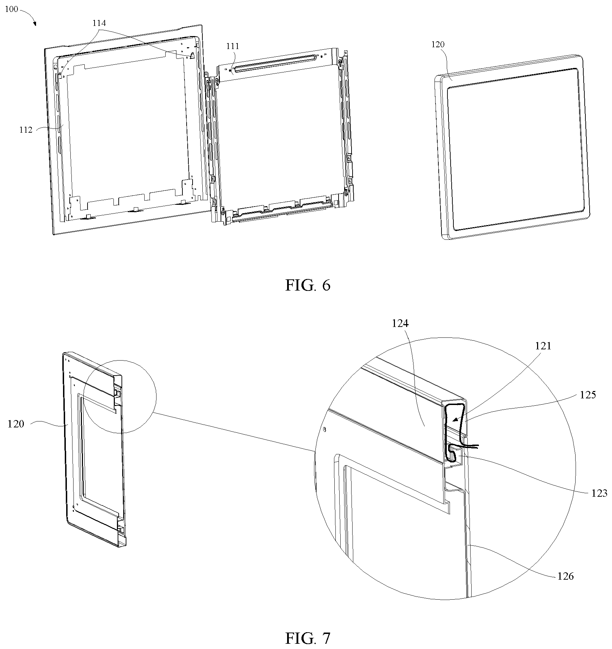

In the embodiment, the structure of the door seal assembly 120 is further defined. The door seal assembly 120includes at least one wave suppressing member 123, the wave suppressing member 123 constitutes at least a portion of the groove wall of the wave suppressing groove 121, and the bending portion 122 is provided at the wave suppressing member 123.The wave suppressing member 123 is made of a metal material; since the bending portion 122 is provided at the wave suppressing member 123, the bending portion 122 can be connected to the groove wall of the wave suppressing groove 121. The transmitting path of a portion of the microwave in the wave suppressing groove 121 is shown in FIG. 7, after the microwave is transmitted to the wave suppressing groove 121, at least a portion of the microwave is transmitted along the groove wall of the wave suppressing groove 121. When the microwave is transmitted to the wave suppressing member 123, the microwave can be transmitted along the surface of the bending portion 122 provided at the wave suppressing member 123, the transmitting path of the microwave is extended, until the microwave is transmitted to the notch of the wave suppressing groove 121, at this moment, at least a portion of the microwave transmitted out of the wave suppressing groove 121 superposes and offsets at least a portion of the microwave transmitted into the wave suppressing groove 121 mutually, and the wave suppressing groove 121 has the function of reducing wave leakage.

Through providing at least one wave suppressing member 123 in the door seal assembly 120, the wave suppressing member 123 constitutes at least a portion of the groove wall of the wave suppressing groove 121, and providing the bending portion 122 at the wave suppressing member 123 can achieve connecting the bending portion 122 to the groove wall of the wave suppressing groove 121, and at least a portion of the microwave can be transmitted along the surface of the bending portion 122 in the process of transmission along the groove wall of the wave suppressing groove 121, firstly, this can mount and fix the bending portion 122, and secondly, this extends the transmitting path of the microwave and enhances the ability of the wave suppressing groove 121 in reducing the wave leakage.

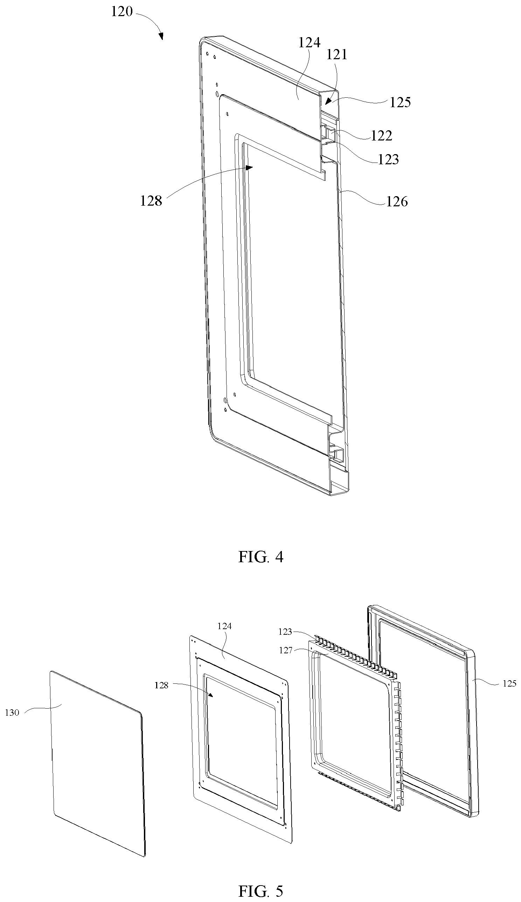

In some technical embodiments, as shown in FIG. 5 and FIG. 7, the door seal assembly 120 further includes a door seal plate 124, and a rear cover 125connected to the door seal plate 124, and the rear cover 125 is provided at the side of the door seal plate 124 facing the cooking cavity, at least a portion of the door seal plate 124, at least a portion of the rear cover 125 and the wave suppressing member 123 enclose the wave suppressing groove 121.

In the embodiment, the structure of the door seal assembly 120 is further defined. The door seal assembly 120 further includes the door seal plate 124 and the rear cover 125, and the rear cover 125 is connected to the door seal plate 124, and the door seal plate 124 is located between the rear cover 125 and the main body 110.There is a gap between the door seal plate 124 and at least a portion of the rear cover 125, the wave suppressing member 123 is located between at least a portion of the rear cover 125 and the door seal plate 124, the rear cover 125, the door seal plate 124 and the wave suppressing member 123 jointly enclose the wave suppressing groove 121.

Furthermore, the rear cover 125 is located at the side of the door seal plate 124 facing the cooking cavity, and the edge of the rear cover 125 and the edge of wave suppressing member 123 have a certain gap therebetween, and the notch of the wave suppressing groove 121 can be defined through the edge of the rear cover 125 and the edge of the wave suppressing member 123, and the notch of the wave suppressing groove 121 is arranged facing the cooking cavity. After the microwave is transmitted into the wave suppressing groove 121 through the notch of the wave suppressing groove 121, at least a portion of the microwave is transmitted along the rear cover 125, the door seal plate 124 and the surface of the wave suppressing member 123 sequentially, until at least a portion of the microwave transmitted out of the wave suppressing groove 121 superposes and offsets at least a portion of the microwave transmitted into the wave suppressing groove 121 mutually when the microwave is transmitted to the notch of the wave suppressing groove 121, and thus the technical effect of reducing wave leakage is achieved.

In a possible embodiment, the door seal plate 124, the rear cover 125 and the wave suppressing member 123 are made of a cold rolled steel plate, and an enamel coating is added on the surface of the cold rolled steel plate, and product costs can be lowered, then the product is cost-effective, and further, the door seal assembly 120 can meet the heat resistance need of the cooking appliances. The door seal plate 124, the rear cover 125 and the wave suppressing member 123 can further be made of a stainless steel plate or other metal materials.

In some embodiments, as shown in FIG. 3, FIG. 5 and FIG. 7, the door seal assembly 120 further includes a heat insulating plate 126 mounted on the rear cover 125, at least a portion of the heat insulating plate 126 is arranged opposite to the notch of the wave suppressing groove 121, and the heat insulating plate 126 can let the microwave pass through.

In the embodiment, the structure of the door seal assembly 120 is further defined. The cooking appliance using the door assembly 100 provided in the present disclosure has a high temperature seal-cleaning function, when the cooking appliance performs high temperature seal-cleaning to the inside of the cooking cavity, the temperature within the cooking cavity can reach 450°C, to carbonize the oil in the cooking cavity and then achieve the seal-cleaning function. A conventional door body cannot bear the high temperature of 450°C, firstly, the door body can be easily damaged due to the high temperature, and then a portion of the components in the door body fail, and secondly, since the door body cannot effectively insulate the high temperature in the cooking cavity, the temperature of the outer wall of the door body is too high, and then users can be easily burned. To improve the heat insulating effect of the door seal assembly 120, the present disclosure further provides the heat insulating plate 126 in the door seal assembly 120.

In an embodiment, the heat insulating plate 126 is mounted on the rear cover 125, and is located at the side of the door seal assembly 120 facing the cooking cavity; since the heat insulating plate 126 has a heat insulating effect, the high temperature in the cooking cavity can be insulated through the heat insulating plate 126, to protect other components in the door assembly 100, and this can further lower the temperature of the wall face of the door assembly 100 facing the outside, and then prevent burning users.

In a possible embodiment, the heat insulating plate 126 is made from a Borosilicate glass, and the heat insulating plate 126 can bear the high temperature of 450°C, to meet the use needs on the cooking appliance.

Furthermore, the heat insulating plate 126 can let the microwave pass through, and in order to transmit the microwave in the cooking cavity into the wave suppressing groove 121, the present disclosure provides at least a portion of the heating insulating plate 126 opposite to the notch of the wave suppressing groove 121, and a portion of the microwave in the cooking cavity can pass through the heat insulating plate 126 and then is transmitted into the wave suppressing groove 121, and then the technical effect is achieved that the wave suppressing groove 121 reduces wave leakage.

In some embodiments, as shown in FIG. 5, the door seal assembly 120 further includes a wave suppressing plate 127 provided between the door seal plate 124 and the rear cover 125, in the case that there are multiple wave suppressing members 123, the multiple wave suppressing members 123 are sequentially connected to the edge of the wave suppressing plate 127 along the circumference of the wave suppressing plate 127.

In the embodiment, the structure of the door seal assembly 120 is further defined. To mount and fix the wave suppressing member 123, the present disclosure further provides the wave suppressing plate 127 in the door seal assembly 120, and the wave suppressing plate 127 is located between the door seal plate 124 and the rear cover 125, in the case that there are multiple wave suppressing members 123, the multiple wave suppressing members 123 are sequentially connected to the edge of the wave suppressing plate 127 along the circumference of the wave suppressing plate 127, therefore, the wave suppressing member 123 can be mounted and fixed through the wave suppressing plate 127.There is a certain gap between any two adjacent wave suppressing members 123. The rear cover 125, the door seal plate 124 and the wave suppressing plate 127 can be connected through a screw.

In the case that the number of the wave suppressing member 123 is one, the wave suppressing member 123 is connected to the edge of the wave suppressing plate 127.

In some embodiments, as shown in FIG. 3 and FIG. 5, the door seal assembly 120 further includes a partition plate 130 connected to the door seal plate 124, the partition plate 130 and the inner wall of the main body 110 jointly enclose an air duct 131; one end of the air duct 131 communicates with the heat dissipation cavity of the cooking appliance and the other end communicates with the outside, and the air duct 131 is used to discharge the air flow in the heat dissipation cavity, to lower the temperature of the door assembly 100.

In the embodiment, the structure of the door seal assembly 120 is further defined. When the cooking appliance executes the high temperature seal-cleaning function, the temperature in the cooking cavity is relatively high, if the temperature of the door assembly 100 is not lowered, this will result in damaging the door assembly 100 due to the high temperature, and result in an excessively high temperature of the wall face of the door assembly 100 facing the outside, which easily burns the user. To avoid the above problems, the present disclosure further provides the partition plate 130 in the door assembly 100, and the partition plate 130 can define the air duct 131 for discharging air with the main body 110, to lower the temperature of the door assembly 100.

In an embodiment, the partition plate 130 is connected to the side of the door seal plate 124 facing the main body 110, there is a certain gap between the partition plate 130 and the inner wall of the main body 110, and the partition plate 130 and the inner wall of the main body 110 enclose the air duct 131. The cooking appliance using the door assembly 100 further includes the heat dissipation cavity, the heat dissipation cavity is provided with a heat dissipating device for dissipating the heat of the cooking appliance, and the heat dissipating device can form an air flow, and the effect of dissipating the heat of the cooking appliance can be achieved through discharging the air flow out of the cooking appliance. One end of the air duct 131 communicates with the outside and the other end communicates with the heat dissipation cavity, and the air flow in the heat dissipation cavity can be discharged to the outside through the air duct 131 in the door assembly 100. As shown in FIG. 2, the direction indicated by the arrows is the flowing direction of the air flow. Therefore, firstly, heat dissipation can be conducted to the door assembly 100 through the air duct 131, and this prevents damaging the door assembly 100 due to the excessively high temperature in the door assembly 100, and secondly, through disposing the partition plate 130, heat insulation can be conducted through the partition plate 130, and thus this effectively lowers the temperature of the wall face of the door assembly 100 facing the outside, and prevents the door assembly 100 from burning the user. Moreover, discharging the air flow in the heat dissipation cavity through the air duct 131 in the door assembly 100 can further dissipate the heat in the heat dissipation cavity, and then has the function of lowering the temperature of the cooking appliance.

Through disposing the partition plate 130 in the main body 110, the air duct 131 can be enclosed through the partition plate 130 and the main body 110, and the air flow in the heat dissipation cavity of the cooking appliance is discharged to the outside through the air duct 131, firstly, heat dissipation to the door assembly 100 can be conducted through the air duct 131, and this prevents damaging the door assembly 100 due to the high temperature in the cooking cavity and prolongs the service life and reliability of the door assembly 100, and secondly, the temperature of the wall face of the door assembly 100 facing the outside can be lowered effectively, which prevents burning the user due to the excessively high temperature of the outer wall of the door assembly 100 and improves product safety.

In some embodiments, as shown in FIG. 3, FIG. 4 and FIG. 5, the door seal plate 124 is provided with a mounting groove 128, and the partition plate 130 is mounted in the mounting groove 128.

In the embodiment, the mounting manner of the partition plate 130 is defined. The door seal plate 124 is provided with the mounting groove 128 for mounting the partition plate 130, and the partition plate 130 is mounted in the mounting groove 128.The mounting groove 128 is located at the side of the door seal plate 124 facing the main body 110, and the partition plate 130 is mounted in the mounting groove 128, and the partition plate 130 is provided adjacent to the main body 110, and encloses the air duct 131 with the main body 110. The partition plate 130 seals the mounting groove 128to avoid the overflow of the air flow in the air duct 131.

Through providing the mounting groove 128 in the door seal plate 124 and mounting the partition plate 130 in the mounting groove 128, the partition plate 130 can be fixed through the door seal plate 124.

In some embodiments, the partition plate 130 is bonded to the door seal plate 124.

In the embodiment, the connecting manner of the partition plate 130 and the door seal plate 124 is defined, and the partition plate 130 is bonded to the door seal plate 124.The partition plate 130 is bonded to the wall face of the mounting groove 128 through a binder. Therefore, the partition plate 130 can be connected to the door seal plate 124, and the side of the partition plate 130 facing the main body 110 keeps clean; compared with the structure that the partition plate 130 is connected to the door seal plate 124 through a screw, the present disclosure connects the partition plate 130 to the door seal plate 124 through a bonding manner, and can avoid exposing the screw out of the surface of the partition plate 130, and avoid the interference of connecting members 150 such as the screw with other structures in the door assembly 100.

Furthermore, the binder can bear the high temperature of 450°C, and the binder does not fail in a high temperature environment.

In some embodiments, as shown in FIG. 3, the door assembly 100 further includes an upper cover 140 connected to the main body 110, and the upper cover 140 is provided with multiple air inlets 141, the air inlets 141 communicate with the heat dissipation cavity of the cooking appliance, and the air duct 131 communicates with the air inlets 141.

In the embodiment, the structure of the door assembly 100 is further defined. The door assembly 100 further includes the upper cover 140, the upper cover 140 is connected to the main body 110 and is provided with multiple air inlets 141, in the case that the upper cover 140 is mounted on the main body 110, the air inlets 141 communicate with the heat dissipation cavity of the cooking appliance, the air duct 131 communicates with the air inlets 141, and the air inlets 141 are used for admitting air. The air inlets 141 are arranged facing the air outlet of the heat dissipation cavity, the air flow discharged out of the heat dissipation cavity flows into the air duct 131 through the air inlets 141 and then discharged through the air duct 131, to achieve the effect of lowering the temperature of the door assembly 100.

In some embodiments, as shown in FIG. 3 and FIG. 6, the main body 110includes: a mounting frame 111connected to the door seal assembly 120; an outer door plate 112 provided at the side of the mounting frame 111 away from the door seal assembly 120, and one end of the outer door plate 112 is connected to the mounting frame 111, and the other end is connected to the door seal assembly 120.

In the embodiment, the structure of the main body 110 is defined. The main body 110includes the mounting frame 111 and the outer door plate 112, and the mounting frame 111 is located between the outer door plate 112 and the door seal assembly 120, and the door seal assembly 120 is connected to the mounting frame 111. Furthermore, the two ends of the outer door plate 112 are respectively connected to the mounting frame 111 and the door seal assembly 120.The upper end of the outer door plate 112 is connected to the mounting frame 111, the side of the outer door plate 112 facing the mounting frame 111 is provided with multiple hooks 114, the multiple hooks 114 are respectively close to the two sides of the outer door plate 112, and the hooks 114 can be hooked on the mounting frame 111, to achieve the connection of the mounting frame 111 and the outer door plate 112. Furthermore, the lower end of the outer door plate 112 is connected to the door seal assembly 120 through a screw, therefore, the outer door plate 112 can be mounted and fixed through the door seal assembly 120 and the mounting frame 111 at the same time, and this improves the overall stability of the door assembly 100.

In some embodiments, as shown in FIG. 1 and FIG. 3, the door assembly 100 further includes multiple connecting members 150 respectively connected to the two sides of the mounting frame 111, and the connecting members 150 are used to connect the door assembly 100 to the box body of the cooking appliance.

In the embodiment, the structure of the door assembly 100 is further defined. To mount the door assembly 100 to the box body of the cooking appliance, the present disclosure provides multiple connecting members 150 in the door assembly 100, and the connecting members 150 are used to connect the door assembly 100 to the box body of the cooking appliance. The multiple connecting members 150 are respectively connected to the two sides of the mounting frame 111, the connecting members 150 are connected to the mounting frame 111 through a screw, at least a portion of the connecting members 150 extend out of the door assembly 100 and are inserted into connecting holes of the cooking appliance matching the connecting members 150, and the door assembly 100 can be connected to the box body of the cooking appliance.

In some embodiments, as shown in FIG. 3, any connecting member 150 includes: a first connecting rod 151 connected to the mounting frame 111; a second connecting rod 152 connected to the box body, and the first connecting rod 151 can rotate with respect to the second connecting rod 152, and the door assembly 100 can rotate with respect to the box body.

In the embodiment, the structure of the connecting member 150 is defined. Any connecting member 150 includes the first connecting rod 151 and the second connecting rod 152, and the first connecting rod 151 is connected to the mounting frame 111, the second connecting rod 152 is connected to the box body of the cooking appliance, and the first connecting rod 151 can rotate with respect to the second connecting rod 152, i.e., the first connecting rod 151 is hinged to the second connecting rod 152. In the case that the user needs to open the door assembly 100, the door assembly 100 can be pulled by the user to rotate towards the direction away from the box body of the cooking appliance, at this moment, the first connecting rod 151 rotates with respect to the second connecting rod 152, and the door assembly 100 can open the cooking cavity, when the user needs to close the cooking cavity, the door assembly 100 is pushed by the user to rotate towards the direction facing the box body of the cooking appliance, at this moment, the first connecting rod 151 rotates with respect to the second connecting rod 152, and the door assembly 100 can close the cooking cavity.

In some embodiments, as shown in FIG. 1 and FIG. 2, the outer door plate 112includes a decoration plate 113, and the material of the partition plate 130, the heating insulating plate 126, and the decoration plate 113 is a high temperature resistant glass.

In the embodiment, in order to keep the beauty of the door assembly 100, the present disclosure further provides the decoration plate 113 at the side of the outer door plate 112 facing the outside, to improve the beauty degree of the door assembly 100. Furthermore, the decoration plate 113 further has a heat insulating function, and the amount of the heat dissipated from the door assembly 100 to the outside can be further prevented by the decoration plate 113.

Furthermore, the partition plate 130, the heat insulating plate 126 and the decoration plate 113 are all made from a high temperature resistant glass, and the high temperature resistant glass can bear a high temperature of 450°C. In a possible embodiment, the partition plate 130, the heat insulating plate 126 and the decoration plate 113 are made from a Borosilicate glass. That is, the door assembly 100provided in the present disclosure includes at least three layers of heat insulating members made from a high temperature resistant glass, that is, the partition plate 130, a second partition plate 130 and the decoration plate 113, compared with a traditional door body, the door assembly 100 provided in the present disclosure has better heat insulating performance.

In a possible embodiment, the present disclosure provides a door assembly 100 provided with a cooling air duct (i.e., the air duct 131), and the cooling air duct has a certain cooling function for the entirety of the door assembly 100. The door assembly 100 is used for the cooking appliance, and in order to solve the problem of the temperature resistance of the door seal assembly 120 in the door assembly 100 when the cooking appliance performs high temperature seal-cleaning, the components in the door seal assembly 120 in the present disclosure are made of a cold rolled steel plate, and the coating on the surface of the cold rolled steel plate is arranged to be enamel; in order to prevent the wave leakage of the door assembly 100, the present disclosure adopts a new type door body structure, to solve the problem of microwave shielding of the door assembly 100.

As shown in FIG. 2, air is blown into the air passage in the front plate of the cavity body of the cooking appliance, the air passage communicates with the heat dissipation cavity of the cooking appliance, and the air enters the inside of the door assembly 100 through the upper cover 140 on the upper portion of the door assembly 100, and this has a certain cooling effect to an outer glass (i.e., the decoration plate 113), and thus meets the use needs and the standard requirements of machine body; when the cooking appliance works, the outer glass needs to meet certain temperature requirements.

The structure of the door assembly 100 is shown in FIG. 3, the door assembly 100 includes a left door hook 160 and a right door hook 160, and the door hooks 160 are fixed in the door seal assembly 120; the door assembly 100 further includes a heat insulating glass (i.e., the partition plate 130), and the heat insulating glass is fixed on the inner side of the door seal assembly 120 through applying silica gel, and an enclosing cavity is formed inside the door assembly 100.

A mounting main mounting frame (i.e., the mounting frame 111) is fixed to the door seal assembly 120 through screws, and a hinge assembly (i.e., the connecting member 150) is fixe at the left and the right sides of the mounting main frame through screws; the hinge assembly is used to fix the entirety of the door assembly 100 to the box body of the cooking appliance; a glass assembly (i.e., the outer door plate 112) includes an outer glass and a metal fence; the glass assembly can be fixed to the mounting main frame through the hooks 114 on the metal fence, and the lower end of the glass assembly is fixed to the door seal assembly 120.

The fixing method of the glass assembly is as follows: the hooks 114 are provided on the upper portion of the metal fence of the glass assembly, and hooked on the mounting main frame from bottom to top, and the glass assembly is fixed to the lower portion of the door seal assembly 120 through screws after the lower portion of the glass assembly is positioned.

As shown in FIG. 7, the structure of the door seal assembly 120 is as follows: reverse teeth (i.e., the wave suppressing member 123) are provided along the edge of the wave suppressing plate 127; the wave suppressing plate 127 is fixed to the rear cover 125 through screws; and for economic reasons, the rear cover 125 is made of a material combined by cold rolled steel plate plus enamel, i.e., a surface treatment manner, or made of a stainless steel material. The door seal plate 124, the rear cover 125 and the waver suppressing member 123 form a semi-enclosed wave suppressing cavity (i.e., the wave suppressing groove 121); the heat insulating glass is fixed to the door seal plate 124 of the door seal assembly 120 through gluing.

The waver suppressing path of the door assembly 100 is as follows: the microwave path that the microwave enters the wave suppressing cavity through the heat insulating plate 126 satisfies that: the length of the microwave path is odd times of 1/2 of the microwave wavelength, and the microwave which enters into and exit from the wave suppressing cavity offset each other, and please refer to FIG. 7 for the path, and it is the same case all around the assembly.

The second aspect of the present disclosure further provides a cooking appliance, including: the door assembly 100 provided in the first aspect of the present disclosure; a box body including a cooking cavity, and the door assembly 100 is used for opening or closing the cooking cavity; and a microwave generating device for radiating microwave into the cooking cavity.

The cooking appliance provided in the present disclosure includes the box body and the door assembly 100, the box body includes the cooking cavity, and the door assembly 100 is connected to the box body and can move between different positions with respect to the box body, and the door assembly 100 can open or close the cooking cavity.

Furthermore, the cooking appliance further includes the microwave generating device, the microwave generating device can generate microwave and radiate microwave into the cooking cavity, and then microwave heating can be conducted to the food ingredients in the cooking cavity through the microwave.

The cooking appliance provided in the second aspect of the present disclosure includes the door assembly 100 provided in the first aspect of the present disclosure, and thus has all the advantageous effects of the door assembly 100.

In some embodiments, the cooking appliance further includes: a heat dissipation cavity communicating with the air inlets 141 of the door assembly 100; and a heat dissipating device provided in the heat dissipation cavity, and the heat dissipating device can form an air flow for heat dissipation, and discharge the air flow into the air duct 131 of the door assembly 100 through the air inlets 141.

In the embodiment, the structure of the cooking appliance is further defined. The cooking appliance further includes the heat dissipation cavity, and the heat dissipation cavity is provided with the heat dissipating device therein, and the heat dissipating device includes a fan. The heat dissipating device can form an air flow for heat dissipation when it operates, the heat dissipation cavity communicates with the air inlets 141 of the door assembly 100, the air flow enters the door assembly 100 through the air inlets 141, the door assembly 100 includes multiple air ducts 131 communicating with the outside, and the air flow moves along the air ducts 131 and is discharged to the outside, to achieve the function of lowering the temperature of the door assembly 100.

In an embodiment, the cooking appliance can be an oven or a microwave steaming and baking integrated machine.

In the specification of the present disclosure, the term of "multiple" indicates two or more, unless otherwise explicitly specified or defined; the terms of "mounted", "connected to", "connected to", "fixing" and the like should be understood in a broad sense, for example, the term "connected to" may be a fixed connection, and may further be a removable connection, or an integral connection; and the term "connected to" may be a direct connection and may further be an indirect connection through an intermediate medium. A person of ordinary skills in the art could understand the specific meanings of the terms in the present disclosure according to specific situations.

In the description of the present specification, the descriptions of the phrases "one embodiment", "some embodiments" and "specific embodiments" and the like mean that the specific features, structures, materials or characteristics described in combination with the embodiment(s) or example(s) are included in at least one embodiment or example of the present disclosure. In the specification, the schematic representation of the above phrases does not necessarily refer to the same embodiment or example. Moreover, the particular features, structures, materials or characteristics described may be combined in a suitable manner in any one or more of the embodiments or examples.

The descriptions above are only some embodiments of the present disclosure, and are not used to limit the present disclosure. For a person skilled in the art, the present disclosure may have various changes and variations. Any modifications, equivalent substitutions, improvements, etc. made within the spirit and principle of the present disclosure shall all be included in the protection scope of the present disclosure.

## Claims

1. A door assembly for a cooking appliance, wherein the cooking appliance comprises a microwave generating device and a cooking cavity, the microwave generating device is configured to radiate microwave into the cooking cavity, and the door assembly comprises:
a main body; and
a door seal assembly, connected to the main body, wherein the door seal assembly is located at a side of the main body facing the cooking cavity and comprises a wave suppressing groove, and a notch of the wave suppressing groove faces the cooking cavity, and at least one bending portion is provided in the wave suppressing groove.

2. The door assembly according to claim 1, wherein, the door seal assembly comprises:
At least one wave suppressing member, and the wave suppressing member constitutes at least a portion of a groove wall of the wave suppressing groove, and the bending portion is provided at the wave suppressing member.

3. The door assembly according to claim 2, wherein, the door seal assembly further comprises:
a door seal plate, and
a rear cover connected to the door seal plate, and the rear cover is provided at a side of the door seal plate facing the cooking cavity, at least a portion of the door seal plate, at least a portion of the rear cover and the wave suppressing member enclose the wave suppressing groove.

4. The door assembly according to claim 3, wherein, the door seal assembly further comprises:
a heat insulating plate mounted on the rear cover, at least a portion of the heat insulating plate is arranged opposite to the notch of the wave suppressing groove, and the heat insulating plate is configured to let the microwave pass through.

5. The door assembly according to claim 3, wherein, the door seal assembly further comprises:
a wave suppressing plate, provided between the door seal plate and the rear cover, wherein, in the case that there are multiple wave suppressing members, the multiple wave suppressing members are sequentially connected to an edge of the wave suppressing plate along a circumference of the wave suppressing plate.

6. The door assembly according to claim 4, further comprising:
a partition plate, connected to the door seal plate, wherein, the partition plate and an inner wall of the main body jointly enclose an air duct; one end of the air duct communicates with a heat dissipation cavity of the cooking appliance and an other end communicates with outside, and the air duct is used to discharge air from the heat dissipation cavity, to lower temperature of the door assembly.

7. The door assembly according to claim 6, wherein,
the door seal plate is provided with a mounting groove, and the partition plate is mounted in the mounting groove.

8. The door assembly according to claim 6, wherein, the partition plate is bonded to the door seal plate.

9. The door assembly according to claim 6, further comprising:
an upper cover, connected to the main body, wherein, the upper cover is provided with multiple air inlets, the air inlets communicate with the heat dissipation cavity of the cooking appliance, and the air duct communicates with the air inlets.

10. The door assembly according to any one of claims 6 to 9, wherein, the main body comprises:
a mounting frame, connected to the door seal assembly; and
an outer door plate, provided at a side of the mounting frame away from the door seal assembly, wherein one end of the outer door plate is connected to the mounting frame, and an other end is connected to the door seal assembly.

11. The door assembly according to claim 10, further comprising:
multiple connecting members, respectively connected to two sides of the mounting frame, wherein, the connecting members are used to connect the door assembly to a box body of the cooking appliance.

12. The door assembly according to claim 11, wherein, any connecting member comprises:
a first connecting rod, connected to the mounting frame; and
a second connecting rod, connected to the box body, wherein, the first connecting rod is configured to rotate with respect to the second connecting rod, so that the door assembly is rotatable with respect to the box body.

13. The door assembly according to claim 10, wherein,
the outer door plate comprises a decoration plate, and a material of the partition plate, the heating insulating plate, and the decoration plate is a high temperature resistant glass.

14. A cooking appliance, comprising:
a door assembly according to any one of claims 1 to 13;
a box body comprising a cooking cavity, wherein the door assembly is used for opening or closing the cooking cavity; and
a microwave generating device for radiating microwave into the cooking cavity.

15. The cooking appliance according to claim 14, further comprising:
a heat dissipation cavity communicating with an air inlet of the door assembly; and
a heat dissipating device provided in the heat dissipation cavity, wherein the heat dissipating device is configured to form an air flow for heat dissipation, and discharge the air flow into an air duct of the door assembly through the air inlet.

16. The cooking appliance according to claim 14, wherein,
the cooking appliance is an oven or a microwave steaming and baking integrated machine.
